Europäisches Patentamt

European Patent Office

Office européen des brevets

(19)

(11) Numéro de publication : 0 516 550 A1

# (12) DEMANDE DE BREVET EUROPEEN

(21) Numéro de dépôt : 92401471.5

(22) Date de dépôt : 29.05.92

(51) Int. Cl.⁵ : $C12G\ 1/06$, $B65D\ 25/10$

(30) Priorité : 30.05.91 FR 9106499

(43) Date de publication de la demande :
02.12.92 Bulletin 92/49

(84) Etats contractants désignés :
BE ES FR IT PT

(71) Demandeur : CENTRE DE DIFFUSION DE LA
METHODE CHAMPENOISE AUTOMATISEE
(M.C.A.) Groupement d'Intérêt Economique
79 avenue A.A. Thévenet
F-51138 Magenta (FR)

(72) Inventeur : Martin, Pierre
L'Echelle, Reuil
FR-51200 Epernay (FR)
Inventeur : Mangin, Francis
41, Allées du Parc
FR-51160 Mareuil-sur-Ay (FR)
Inventeur : Hardy, Georges
6, rue Jules Ferry, Oiry
FR-51200 Epernay (FR)

(74) Mandataire : Viard, Jean
Cabinet VIARD 28 bis, avenue Mozart
F-75016 Paris (FR)

(54) Caisse de manutention et de stockage.

(57)  Caisse de stockage et de manutention de bouteilles notamment en méthode champenoise. Des grilles sont montées de manière amovible à l'intérieur d'une structure porteuse (1, 2, 3, 4) de manière à moduler la capacité de la caisse en fonction des dimensions des bouteilles.

FIG.1

EP 0 516 550 A1

La présente invention a pour objet une caisse de manutention et de stockage destinée en particulier, mais non exclusivement, à la manutention et au stockage d'un ensemble de bouteilles, pouvant être utilisée notamment en vue du remuage automatique dans le procédé connu sous le nom de méthode champenoise.

Le remuage automatique du vin implique la prise en charge simultanée d'un grand nombre de bouteilles. Il est donc nécessaire de prévoir des caisses, casiers ou containers permettant de rassembler un ensemble de bouteilles, cet ensemble pouvant être traité dans un appareil notamment lors du remuage.

Une caisse ou casier de ce type est décrit dans FR-A-2 456 776. Dans ce brevet, les parois latérales du casier perpendiculaire au fond sont pourvues, à l'intérieur du casier de rails disposés perpendiculairement au fond de celui-ci de manière à guider les bouteilles introduites en position couchée par la face ouverte du casier et à assurer le calage des bouteilles placées contre lesdites parois latérales après remplissage de la caisse. Les rails de guidage des parois latérales sont constitués par des tiges ou des fils rigides espacés selon le diamètre des bouteilles. La manutention des caisses ou casiers est effectuée à l'aide de chariots élévateurs ou analogues.

Une caisse ou casier de ce type est également décrite dans FR-A-2 562 508. Dans ce brevet, la manutention des caisses ne se fait plus à l'aide des fourches d'un chariot élévateur mais un ancrage est intégré à l'intérieur de la caisse, ancrage qui permet la prise de celle-ci au moyen d'un engin élévateur équipé d'un attachement approprié.

Une caisse de ce type permet l'introduction de bouteilles couchées ou "sur lattes" par une face ouverte et l'extraction desdites bouteilles lorsque après remuage elles sont en position verticale ou "sur pointes", leur goulot étant tourné vers le bas. Une telle caisse se présente sous la forme d'un parallélépipède rectangle ouvert sur l'une de ses faces et dont le fond comporte des éléments d'appui pour les goulots des bouteilles.

Malheureusement, si ces caisses conviennent parfaitement aux bouteilles dites "standard" ou "légère" dont le diamètre est sensiblement égal à 86 mm, il n'en va pas de même pour les bouteilles spéciales que les récoltants manipulateurs ou négociants ont tendance à utiliser afin de différencier leur production.

Alors qu'une caisse permet normalement de recevoir 504 bouteilles standard, ce chiffre peut tomber dans certains cas à 380 bouteilles. Dans ces conditions, l'automatisation du remuage est hasardeuse.

La présente invention a pour objet de remédier à cet inconvénient et de proposer une caisse modulable permettant le remuage, à usage universel, c'est à dire pouvant être employée avec des bouteilles de dimensions différentes.

Selon la présente invention, la caisse parallélépipédique métallique notamment pour la manipulation de bouteilles dans la méthode champenoise incluant des moyens de préhension intégrés opposés à un fond de la caisse constitué par un profilé en omega est caractérisée en ce qu'elle comprend une structure porteuse monobloc à l'intérieur de laquelle est boulonné un ensemble de grilles.

Ainsi, la fonction de manutention et la fonction de maintien des bouteilles sont différenciées ce qui permet d'adapter les grilles à la taille des bouteilles à l'intérieur d'une même structure porteuse.

D'autres caractéristiques et avantages de l'invention apparaîtront au cours de la description qui va suivre de modes particuliers de réalisation donnés à titre d'exemples non limitatifs en regard des figures qui représentent :

- La figure 1, une vue de l'ossature de la caisse selon l'invention;
- la figure 2, une vue de la grille de base;
- la figure 3, une vue de la grille droite à boulonner;
- la figure 4, une vue d'un doublage du fond adapté aux bouteilles spéciales.

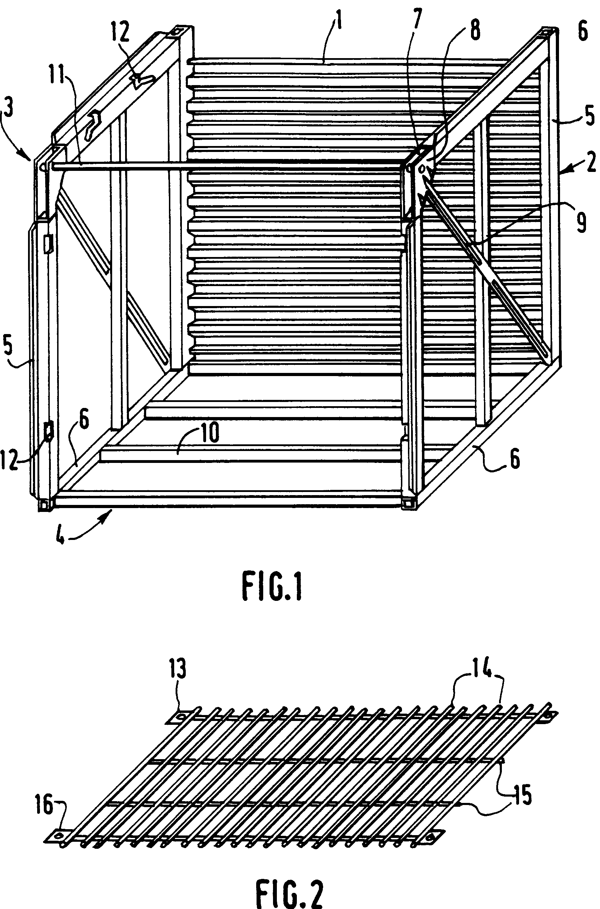

Sur la figure 1, est représentée la structure porteuse de la caisse. Elle est constituée par un ensemble monobloc d'acier galvanisé à chaud comprenant un fond 1 en omega destiné à maintenir les cols des bouteilles du premier lit de bouteilles, deux faces latérales 2 et 3 et une face de base 4 perpendiculaire à la face de fond. Chacune des faces latérales 2, 3 se compose de trois montants 5 réunis à chacune de leurs extrêmités par une traverse 6. Chaque face latérale comporte également dans son angle supérieur avant (sur le dessin) une tige d'ancrage 7 montée entre deux flancs 8. Entre cet angle et l'angle diagonalement opposé est prévu une élingue de renforcement 9. La tige d'ancrage 7 comme connu en soi permet de soulever la caisse alors qu'elle est dans une première position, par exemple pour l'amener sur un appareil de remuage et de reprendre cette caisse alors qu'elle a pivoté de 90° pour la décharger de l'appareil de remuage et la conduire jusqu'à l'étape de dégorgement.

La face inférieure de base 4 de l'ossature est elle-même composée des deux traverses 6 des faces 3 et 4 et de profilés 10, soudés, de renforcement. Les deux angles portant les tiges d'ancrage 7 sont réunis par une barre 11.

L'ensemble est soudé et le fond 1 est également soudé sur la structure qui est ainsi indéformable.

Dans les montants 5 des faces 2 et 3 et dans les traverses supérieures 6 sont prévues des encoches 12 permettant la fixation de portillons amovibles qui ont pour but d'éviter la chute des bouteilles.

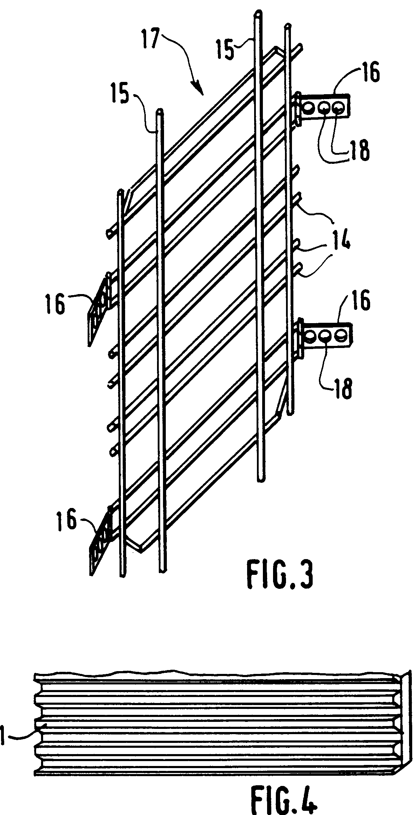

A l'intérieur de cette structure, on va conformément à l'invention monter par boulonnage des grilles telles que celles représentées sur les figures 2 et 3. La grille de base 13 représentée sur la figure 2 comporte un ensemble de fils parallèles 14 espacés deux à deux de telle manière que les bouteilles introduites couchées soient guidées par lesdits fils 14. Ceux-ci sont soudés sur des fers de rigidité perpendiculaires 15. L'ensemble est boulonné au moyen de pattes 16 qui font saillie à l'extrêmité de la grille, les boulons se vissant dans des trous 20 des montants ou des traverses.

Le même mode de fixation est utilisé pour les grilles latérales 17 dont une seule est représentée sur la figure 3. Il s'agit en l'occurrence d'une grille droite lorsque l'on prend comme position de référence la position de la figure 1. Cette grille comporte comme précédemment des fils 14 de guidage et de maintien des bouteilles ainsi que des fils 15 perpendiculaires aux fils 14 réunissant ceux-ci. Comme précédemment, des pattes 16 perpendiculaires à la surface de la grille présentent un certains nombres de trous 18 permettant de régler l'espacement entre les deux grilles. Il est également possible de terminer la grille par des oeillets jouant le rôle des pattes. Grâce à cette disposition, il est possible de boulonner les grilles de telle sorte que leur distance corresponde à un nombre entier de diamètres de bouteille. Et ainsi, quel que soit ce diamètre les bouteilles pourront être introduites dans la caisse et maintenues convenablement à l'intérieur de celles-ci.

De préférence, les grilles 13 ou 17 sont réalisées en un matériau différent de celui de la structure porteuse. Elles peuvent être par exemple en acier inoxydable ou en matière plastique armée. Elles peuvent également être en acier ordinaire revêtu d'une couche de matière plastique ce qui d'une part facilite le glissement des bouteilles et d'autre part évite toute oxydation des grilles qui malgré la protection des métaux peut se produire dans des caves humides et peu aérées.

Lorsque l'on doit stocker et amener dans un appareil de remuage des bouteilles spéciales, il est possible de boulonner sur le fond 1 en omega une doublure 19 telle que celle représentée sur la figure 4 et dont la section est également en omega, le pas de ce fond étant différent de celui qui est utilisé dans le cas de bouteilles standard.

**Revendications**

1. Caisse métallique parallélépipédique notamment pour la manutention de bouteilles dans la méthode champenoise, incluant des moyens de préhension intégrés (7) opposés à un fond (1) constitué par un profilé en omega, caractérisée en ce qu'elle comprend par une structure porteuse (1, 2, 3, 4) monobloc, soudée, à l'intérieur de laquelle sont fixées des grilles (13, 17) de manière amovible.

2. Caisse selon la revendication 1, caractérisée en ce que les grilles (13, 17) sont boulonnées sur la structure porteuse au moyen de pattes (16) ou oeillets de manière à ce que leur espacement soit réglable.

3. Caisse selon la revendication 1 ou 2, caractérisée en ce que les grilles (13, 17) sont constituées d'acier inoxydable ou de matière plastique armée.

4. Caisse selon la revendication 1 ou 2, caractérisée en ce que les grilles (13, 17) sont constituées de fils d'acier ordinaire enrobés dans une couche de matière plastique.

FIG.1

FIG.2

FIG.3

FIG.4

EP 0 516 550 A1

Office européen
des brevets

**RAPPORT DE RECHERCHE EUROPEENNE**

Numero de la demande

EP    92 40 1471

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 020 227 (CENTRE DE DIFFUDION DE LA METHODE CHAMPENOISE)<br>* page 3, ligne 2 - ligne 11 *<br>* page 4, ligne 32 - page 7, ligne 3 *<br>* abrégé; figures 2,4,16 *<br>--- | 1 | C12G1/06<br>B65D25/10 |
| A | FR-A-2 614 007 (CENTRE DE DIFFUDION DE LA METHODE CHAMPENOISE)<br>* page 6, ligne 4 - ligne 10; figures 1-5 *<br>--- | 1 | |
| D,A | FR-A-2 456 776 (CAZALS ET AL)<br>--- | | |
| D,A | FR-A-2 562 508 (CENTRE DE DIFFUSION DE LA METHODE CHAMPENOISE)<br><br>----- | | |
| | | | **DOMAINES TECHNIQUES RECHERCHES (Int. Cl.5)**<br><br>C12G<br>B65D |

Le présent rapport a été établi pour toutes les revendications

| Lieu de la recherche | Date d'achèvement de la recherche | Examinateur |
|---|---|---|
| BERLIN | 09 SEPTEMBRE 1992 | SPETTEL J.D.M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

6